# EUROPÄISCHE PATENTSCHRIFT

(11) **EP 0 535 558 B1**
(45) Veröffentlichungstag und Bekanntmachung des Hinweises auf die Patenterteilung: **19.07.1995**
(21) Anmeldenummer: 92116477.8
(22) Anmeldetag: 25.09.1992
(51) Int. Cl.: B60R 25/10

(54) **Sensoranordnung zur Ultraschall-Überwachung eines Kfz-Innenraumes**
Arrangement of sensors for the ultrasonic surveillance of the interior of a vehicle
Système de capteurs ultrasoniques pour la surveillance de l'habitacle d'un véhicule

(30) Priorität: 30.09.1991 DE 4132523
(43) Veröffentlichungstag der Anmeldung: 07.04.1993
(73) Patentinhaber: SIEMENS AKTIENGESELLSCHAFT, 80333 München (DE)
(72) Erfinder: Mulders, Stephanus, W-8403 Bad Abbach (DE)

(56) Entgegenhaltungen:
- DE-A- 3 003 887
- PATENT ABSTRACTS OF JAPAN vol. 10, no. 62 (M-460)(2119) 12. März 1986
- Druckschrift OPEL/EUROSERVICE, Produktangebot Modelljahr 1990, Kundendienst Produktinformation, Sept. 1989, Seiten 180 und 185.

## Beschreibung

Die Erfindung betrifft die Erschwerung von Einbrüchen und Diebstählen eines Kfz, bzw. das Erschweren des unbemerkten Betretens des Kfz.

Die Erfindung geht nämlich von dem im Oberbegriff des Patentanspruches 1 definierten Gegenstand aus, der für sich vorbekannt ist, vgl. z.B.
- DE-A-30 03 887
- sowie die Druckschrift OPEL / EUROSERVICE, Produktangebot Modelljahr 1990, Kundendienst Produktinformation, Sept. 1989, Seiten 180 und 185.

Daneben ist ein ähnlicher Gegenstand durch die
- WO 90/12379
bekannt. Der Hauptaspekt dieses Standes der Technik betrifft übrigens die Erkennung von Scheibenbrüchen durch Überwachung der bei Scheibenbruch auftretenden Luftschwingungen um hohen Ultraschallbereich. Auch dazu eignet sich das Prinzip der erfindungsgemäße Sensoranordnung.

Eine weitere ähnliche Sensoranordnung ist durch die nicht veröffentlichte
- EP-Anmeldung 90 117 296.5
bekannt. Der Hauptaspekt liegt dort auf der Überwachung der Echoprofile von Impulsen eines akustischen Radars im Ultraschallbereich. Die dort beschriebenen Überwachungen der Echoprofilen müssen nicht aber können, jedenfalls im Prinzip, auch bei der Erfindung angewendet werden. Die Erfindung ist also nicht auf die Auswertung von Scheibenbruchgeräuschen beschränkt, aber auch nicht auf die Auswertung von akustischen Radarimpulsechoprofilen. Die Erfindung kann also auf verschiedenen Gebieten der Kfz-Elektronik verwendet werden.

Es gibt weitere Druckschriften über ähnliche Sensoranordnungen, welche andere Hauptaspekte solcher Sensoranordnungen beschreiben, - z.B. anders hinsichtlich des ausgewerteten Frequenzbereiches und hinsichtlich der räumlichen Anordnungen der Sensoren. Dementsprechend vielseitig kann die Erfindung verwendet werden, vor allem weil sie nicht auf die Anwendung von speziellen Ultraschallfrequenzen oder speziellen Energieniveaus oder eines speziellen zeitlichen Verlaufes des Ultraschalles beschränkt ist.

Die Aufgabe,
- die Sensoranordnung möglichst unauffällig und damit für Einbrecher nicht sofort sichtbar anbringen zu können,
- eine Gefährdung von Kfz-Insassen durch hervorstehende Teile der Sensoranordnung bei einem Unfall ausschließen zu können,
- mit der Richtcharakteristik der Keule des Sensors oder der Sensoren unschwer große, interessierende Bereiche des Kfz-Innenraumes erfassen zu können,
- und den Aufwand für ein gefälliges Design für ein Gehäuse der Sensoranordnung selbst für Luxus-Kfz unnötig zu machen, so daß die erfindungsgemäße Sensoranordnung für beliebige Kfz-Typen, aber auch für teuerste Luxus-Kfz ohne weiteres ohne Designänderung verwendbar ist,
wird erfindungsgemäß durch den im Patentanspruch 1 definierten Gegenstand gelöst. Die Erfindung erfüllt also mehrere ganz wesentliche, schwerwiegende Anforderungen, die heute an ein Kfz, auch der gehobensten Klassen, gestellt werden.

Die in den Unteransprüchen definierten Gegenstände gestatten, zusätzliche Vorteile zu erreichen. U.a. gestatten nämlich die zusätzlichen Maßnahmen gemäß dem Patentanspruch
2, die Sensoranordnung so verdeckt anbringen zu können, daß sie durch die Kfz-Scheiben hindurch, auch bei einem Blick quer durch den Kfz-Innenraum, kaum auffällt, sowie weitgehend ungedämpft besonders die an die Keulen angrenzenden Scheiben und / oder besonders die dazu benachbarten Innenraumabschnitte überwachen zu können,
3, besonders entsprechend große Teile der Scheiben und / oder besonders die dazu benachbarten Innenraumabschnitte überwachen zu können,
4, entsprechend lückenarm den Kfz-Innenraum überwachen zu können, und
5, lange Leitungen zwischen den Sensoren und der Auswerteelektronik und damit kapazitive und induktive Störungen in solchen langen Leitungen vermeiden zu können, sowie Vorverstärker zur Übertragung der Sensorausgangssignale über solche lange Leitungen vermeiden zu können.

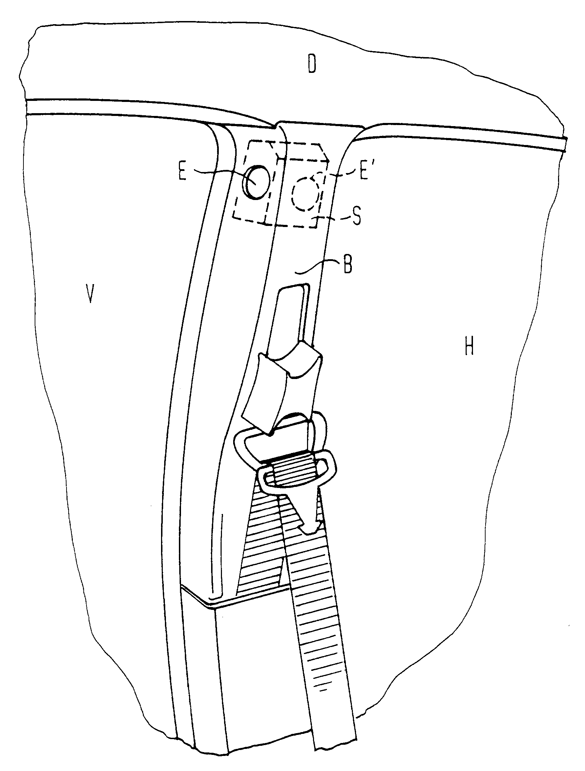

Die Erfindung und Weiterbildungen derselben werden anhand des in der Figur gezeigten Ausführungsbeispieles der Erfindung weiter erläutert, welche der Übersichtlichkeit wegen möglichst einfach dargestellt wurde.

Diese Figur zeigt die Sensoranordnung E, E', S, welche ein Bestandteil einer Einbruchswarnanlage zur Ultraschall-Überwachung eines Kfz-Innenraumes ist. Die Sensoranordnung ist nahe am Dach D im oberen Bereich des B-Holmes B angebracht, nämlich zwischen der vorderen Seitenscheibe V und der hinteren Seitenscheibe H des Kfz, und zwar so verdeckt durch die dortige Innenraumverkleidung, sie möglichst unauffällig und damit für Einbrecher nicht sofort sichtbar ist. Dadurch wird dem Einbrecher erschwert Gegenmaßnahmen zu ergreifen, durch welche er versuchen kann, die Sensoranordnung unwirksam zu machen. Die Erfindung vermindert also das Risiko des Kfz-Benutzers, daß ein Einbruch keinen Alarm auslöst.

Überdies gestattet diese - nämlich erfindungsgemäß von der Innenraumverkleidung verdeckte - Anbringung der Sensoranordnung, jegliche Art von Sensoranordnungsteilen zu vermeiden, welche in den Kfz-Innenraum hervorstehen bei einem Unfall die Kfz-Insassen gefährden könnten. Auch das ist ein erheblicher Vorteil, und zwar nicht nur für den Kfz-Benutzer.

Außerdem gestattet diese erfindungsgemäß verdeckte Anbringung unter der Innenraumverkleidung, die Richtcharakteristik der Keule des Sensors oder der Sensoren unschwer auf große, interessierende Bereiche des Kfz-Innenraumes zu richten, so daß ein entsprechend großer Schutz gegen Einbruch und unbefugtes Betreten erreicht werden kann.

Die Erfindung hat aber auch Vorteile für die Hersteller der Sensoranordnung und für Hersteller des Kfz : Die Erfindung gestattet ihnen durch die verdeckte Anbringung unter der Innenraumverkleidung, Kosten für die Gestaltung eines gefälligen Design für sichtbares Teile des Gehäuses der Sensoranordnung zu vermeiden. Solche Kosten können durch die Erfindung selbst dann eingespart werden, wenn die Sensoranordnung erfindungsgemäß in ein Luxus-Kfz eingebaut wird.

Überdies verringert sich die sonst aus Designgründen oft nötige Typenvielfalt und dadurch auch die entsprechende Lagerhaltung im Handel mit Zubehör und Ersatzteilen.

An sich kann man die Sensoren auch hinter einer mehr oder weniger schalldurchlässigen Innenraumverkleidung anbringen, wenn sie also die ausgewerteten Schallfrequenzen nicht zu stark dämpft. Um aber weitgehend ungedämpft die Schallschwingungen empfangen zu können, kann man möglichst unauffällige kleine Aussparungen, also Löcher, in der Innenraumverkleidung anbringen, durch welche hindurch die betreffenden Sensoren, vgl. E, die Schallschwingungen empfangen können. Dabei kann man diese Aussparung jeweils so räumlich orientieren, daß die Richtcharakteristik der Keule des betreffenden Sensors möglichst gut den interessierenden Raumbereich erfaßt.

Wenn z.B. diese Keule des Sensors, vgl. E - oder der betreffenden zwei, entgegengesetzt gerichtete Keulen aufweisende Sensoren, vgl. E und E' - , insbesondere durch solche Aussparungen der Innenraumverkleidung hindurch, mehr oder weniger parallel zu, also entlang, einer benachbarten Scheibe, vgl. V und H, gerichtet ist bzw. sind, dann kann man mehrere Vorteile erreichen : So kann man erreichen, daß die Sensoranordnung so verdeckt angebracht ist, daß sie durch die Kfz-Scheiben hindurch, auch bei einem Blick quer durch den Kfz-Innenraum, kaum noch auffällt, ja sogar kaum noch erkennbar ist. Außerdem kann man erreichen, daß die Sensoranordnung die auszuwertenden Schallschwingungen ungedämpft durch im Wege stehende Innenraumverkleidungsteile empfangen kann , sowie daß besonders gut die an die Keulen angrenzenden Scheiben und / oder die dazu benachbarten Innenraumabschnitte überwacht werden können.

Um besonders gut große Teile der Scheiben und / oder die dazu benachbarten Innenraumabschnitte überwachen zu können, kann man auch zwei Sensoren in der betreffenden Sensoranordnung anbringen, vgl. E, E', von denen die Richtcharakteristik der Keule des ersten mehr oder weniger nach vorne, also zur Kfz-Front hin, und die Richtcharakteristik der Keule des zweiten nach hinten, also zur Kfz-Heck hin, gerichtet ist.

Um möglichst wenig unüberwachte Lücken übrig zu lassen, um also einen möglichst lückenarmen soliden Schutz des Kfz-Innenraumes zu erreichen, kann man zwei Sensoranordnungen anbringen, nämlich die eine in Dachnähe am B-Holm B der linken Kfz-Seite und die andere ebenfalls in Dachnähe am B-Holm B der rechten Kfz-Seite.

Um lange Leitungen zwischen den Sensoren und der Auswerteelektronik und um damit kapazitive und induktive Störungen in solchen langen Leitungen vermeiden zu können, sowie um Vorverstärker zur Übertragung der Sensorausgangssignale über solche lange Leitungen vermeiden zu können, kann man die Sensoranordnung, vgl. E, E', S, in einem von der Innenraumverkleidung verdeckten Gehäuse S unterbringen, welches zusätzlich die die Sensorsignale auswertende Auswerteelektronik enthält.

## Patentansprüche

1. Ultraschall-Sensoranordnung (E, E', S) für eine Einbruchswarnanlage mit Ultraschall-Überwachung eines Kfz-Innenraumes,
- wobei die Sensoranordnung (E, E', S) nahe am Dach (D) des Kfz im oberen Bereich des B-Holmes (B), also zwischen der vorderen (V) und der hinteren Seitenscheibe (H), angebracht ist,
**dadurch gekennzeichnet,**
- daß sie (E, E', S) dort verdeckt durch die dortige Innenraumverkleidung angebracht ist.

2. Sensoranordnung (E, E', S) nach Patentanspruch 1,
**dadurch gekennzeichnet,**
- daß die Keule der Richtcharakteristik ihres Sensors (E, E') bzw. die Keulen der Richtcharakteristiken ihrer Sensoren (E, E') durch Aussparungen der Innenraumverkleidung hindurch mehr oder weniger entlang den benachbarten Scheiben (V, H) gerichtet sind.

3. Sensoranordnung (E, E', S) nach Patentanspruch 1 oder 2,
**dadurch gekennzeichnet,**
- daß sie (E, E', S) zwei Sensoren (E, E') enthält, von denen die Keule der Richtcharakteristik des ersten nach vorne und die Keule der Richtcharakteristik des zweiten nach hinten gerichtet ist.

4. Sensoranordnung (E, E', S) nach einem der vorhergehenden Patentansprüche,
**dadurch gekennzeichnet,**
- daß sie (E, E', S) zweifach angebracht ist, nämlich sowohl am B-Holm (B) der linken als auch am B-Holm (B) der rechten Kfz-Seite.

5. Sensoranordnung (E, E', S) nach einem der vorhergehenden Patentansprüche,
**dadurch gekennzeichnet,**
- daß sie (E, E', S) in einem von der Innenraumverkleidung verdecktes Gehäuse (S) untergebracht ist, welches zusätzlich eine die Sensorsignale auswertende Auswerteelektronik enthält.

## Claims

1. Ultrasonic sensor arrangement (E, E', S) for a break-in alarm system comprising ultrasonic surveillance of the passenger compartment of a motor vehicle,
- the sensor arrangement (E, E', S) being attached near to the roof (D) of the motor vehicle in the upper area of the B pillar (B), that is to say between the front (V) and the rear side window pane (H), characterized
- in that the said sensor arrangement (E, E', S) is attached there concealed by the interior panelling there.

2. Sensor arrangement (E, E', S) according to Patent Claim 1, characterized
- in that the lobe of the directivity pattern of its sensor (E, E') or the lobes of the directivity patterns of its sensors (E, E') is/are directed through recesses in the interior panelling more or less along the adjacent window panes (V, H).

3. Sensor arrangement (E, E', S) according to Patent Claim 1 or 2, characterized
- in that the said sensor arrangement (E, E', S) contains two sensors (E, E'), of which the lobe of the directivity pattern of the first said sensor is directed forwards and the lobe of the directivity pattern of the second said sensor is directed rearwards.

4. Sensor arrangement (E, E', S) according to one of the preceding patent claims, characterized
- in that the said sensor arrangement (E, E', S) is provided in duplicate, namely both on the B pillar (B) of the left-hand side of the motor vehicle and on the B pillar (B) of the right-hand side of the motor vehicle.

5. Sensor arrangement (E, E', S) according to one of the preceding patent claims, characterized
- in that the said sensor arrangement (E, E', S) is accommodated in a housing (S) which is covered by the interior panelling and additionally contains an electronic evaluation system which evaluates the sensor signals.

## Revendications

1. Système de capteurs ultrasoniques (E, E', S) pour une installation d'alarme anti-vol, comportant une surveillance par ultrasons de l'habitacle d'un véhicule automobile,
- le système de capteurs (E, E', S) étant disposé au voisinage du toit (D) du véhicule, dans la zone supérieure du montant (B), donc entre la glace latérale avant (V) et la glace latérale arrière (H),
caractérisé en ce que
ce système de capteurs (E, E', S) est disposé à cet endroit en étant recouvert par le revêtement local de l'habitacle.

2. Système de capteurs (E, E', S) suivant la revendication 1, caractérisé en ce que le lobe du faisceau de rayonnement de la caractéristique directionnelle de son capteur (E, E'), ou les lobes des faisceaux de rayonnement des caractéristiques directionnelles de ses capteurs (E, E'), sont dirigés plus ou moins le long des glaces latérales voisines (V, H), en traversant des évidements du revêtement de l'habitacle.

3. Système de capteurs (E, E', S) suivant la revendication 1 ou la revendication 2, caractérisé en ce que ce système de capteurs (E, E', S) comporte deux capteurs (E, E'), le lobe du faisceau de la caractéristique de direction du premier capteur étant dirigé vers l'avant et le lobe du faisceau de la caractéristique de direction du deuxième capteur étant dirigé vers l'arrière.

4. Système de capteurs (E, E', S) suivant l'une des revendications précédentes, caractérisé en ce que ce système de capteurs (E, E', S) est monté en double, c'est-à-dire aussi bien sur le montant (B) du côté gauche du véhicule, que sur le montant (B) du côté droit du véhicule.

5. Système de capteurs (E, E', S) suivant l'une des revendications précédentes, caractérisé en ce que ce système de capteurs (E, E', S) est monté dans un boîtier (S), recouvert par le revêtement de l'habitacle, ce boîtier comportant, en plus, une électronique d'interprétation, exploitant les signaux des capteurs.
